# EUROPEAN PATENT SPECIFICATION

(11) **EP 3 853 595 B1**
(45) Date of publication and mention of the grant of the patent: **03.07.2024**
(21) Application number: 19801412.8
(22) Date of filing: 18.09.2019
(51) Int. Cl.: G01N 22/04, A24C 5/34, D01G 31/00

(54) **ELECTROMAGNETIC DETECTOR FOR DETECTING PROPERTIES OF PRODUCTS OF THE TOBACCO INDUSTRY**
ELEKTROMAGNETISCHER DETEKTOR ZUR ERFASSUNG VON EIGENSCHAFTEN VON PRODUKTEN DER TABAKVERARBEITENDEN INDUSTRIE
DÉTECTEUR ÉLECTROMAGNÉTIQUE PERMETTANT LA DÉTECTION DE PROPRIÉTÉS DE PRODUITS DE L'INDUSTRIE DU TABAC

(30) Priority: 21.09.2018 IT 201800008793
(43) Date of publication of application: 28.07.2021
(73) Proprietor: G.D S.p.A., 40133 Bologna (IT)
(72) Inventor: TRIVISONNO, Eura, 40133 Bologna (IT); FRASSON, Marco, 40133 Bologna (IT); GALLI, Mauro, 40133 Bologna (IT); SARTONI, Massimo, 40133 Bologna (IT)
(74) Representative: Persi, Patrizia
(86) International application number: PCT/IB2019/057855
(87) International publication number: WO 2020/058868

(56) References cited:
- EP-A1- 0 889 321
- EP-A1- 3 176 567
- EP-A2- 2 572 594
- DE-A1-102013 213 936

## Description

This invention relates to an electromagnetic detector for detecting one or more properties of a product, for example a rod-shaped article, or a semi-finished product, of the tobacco industry.

In particular, this invention is intended for making an electromagnetic detector, in which an electromagnetic field is located, which comprises a detecting channel open on three sides to allow the product to pass through the electromagnetic detector along a pass-through direction.

The electromagnetic detector according to this invention is a detector substantially having a U or a C shape, through which it is possible to pass the product whose properties must be detected, in the pass-through direction or in which the product can be inserted and extracted in a movement direction, perpendicular to the pass-through direction.

The term "product" in this context means an elongate rod-shaped article, which may be a finished article intended for sale (for example: cigarettes, cigars, cigarillos, etc.) or a piece of it (for example: a piece containing tobacco, a piece of filter for example containing one or more capsules or combinations of them).

At present, it is possible to make very complex cigarettes comprising series of coaxial pieces of different types and composition and, generically, the term "cigarette" refers to an article for the tobacco industry comprising an active portion intended to release a substance to be inhaled.

The active portion may comprise only tobacco to be burned or other components, or it may comprise at least one piece of tobacco defining an aerosol-generating element or a heat-not-burn type tobacco containing product. In other words, at present, the term "cigarette" may also refer to an electronic cigarette in which the tobacco is heated to generate aerosol. While the rod-shaped articles are being made and packaged, it is important to carry out checks on quality so as to verify that they comply with requirements and meet predetermined acceptability criteria. Such checks are carried out by detecting properties of the articles, such as the density and/or humidity, which can be used to arrive at the weight of the article. For example, relative to pieces of filter with capsules, in order to detect the presence of the capsules in the filter, the density and/or humidity characteristics of each capsule are detected and the characteristics of each capsule in the filter are used to determine its position and/or its integrity. However, in this context the term "product" also indicates a semi-finished product intended to be wrapped.

Indeed, in the tobacco industry, there is a wide variety of situations in which it is necessary to wrap a suitable semi-finished product (for example tobacco or filter material) using a wrapping material for making a rod which is then destined to be divided, in subsequent steps of the production process, until it forms the elongate article to be made, or the piece of it. By detecting some of the properties of the semi-finished product, such as density and/or humidity, it is possible to carry out a quality check on the rod, ensuring that the rod is made correctly and therefore that ultimately the finished article is made correctly.

A known way of carrying out the checks on the cigarettes, on the pieces, or on the semi-finished product is to provide inside the machines a plurality of electromagnetic detectors substantially having the shape of cylinders with a circular U, or C-shaped cross-section, to analyse the products in different steps of their production and packaging process, so as to allow the rejection of non-conforming articles and identification of faults and malfunctions of some machine components. The electromagnetic detectors, by creating an electromagnetic field with electromagnetic waves, are able to pass through the product, detecting one or more properties of the article, or of the semi-finished product.

The types of detections and checks which can be carried out vary based on requirements and on the type of article which is produced.

For example, in order to detect the characteristics of the capsules in the filters, the checks are usually performed at rotary drums which have cradle-shaped suction seats, called "couvettes", at whose periphery the articles to be checked are held. The electromagnetic detector is positioned in front of the drum and scans/detects the articles held by the drum as they are fed so as to proceed with a detection of their characteristic properties. During the check, the articles pass through the detector in the pass-through direction. If, in contrast, checks must be carried out on the formed rod, in which the semi-finished product is already completely wrapped in a web of wrapping material, in the prior art the electromagnetic detector is positioned before the rod is wrapped if the web of wrapping material has portions which are metallic, or at least partly metallized. Considering, for example, machines for the production of continuous rods of tobacco, which usually use a substantially vertical flue fed at the bottom by a continuous flow of tobacco particles, at the top end of which a belt, preferably a suction belt is positioned, on which a continuous mass of tobacco forms, it is known from document WO2016162292 that the electromagnetic detector is integrated in a channel defined by the suction belt.

The electromagnetic detector allows the suction belt and the tobacco held by it to pass through it.

In this way, it is possible to check a quantity of tobacco which is transferred at infeed to a continuous rod forming beam, positioned downstream of the suction flue, in such a way as to ensure that the articles resulting from that production process have a correct quantity of tobacco in them.

The same considerations also apply for other types of semi-finished product which can be used to make a continuous rod wrapped in metallized paper, which may be, for example, a material intended to generate aerosol, a mass of tobacco fibre, a bar of filter material, a homogeneous or heterogeneous series of pieces of filter material or a bar of material derived from the tobacco.

In these cases too, the detector must be positioned before the rod is wrapped.

Therefore, according to what is described above, it is becoming very widespread in machines for making articles of the tobacco industry, both for detecting properties of finished articles and of pieces of them, and for detecting properties of a semi-finished product, to use electromagnetic detectors capable of generating an electromagnetic field in a detecting channel open on three sides, in which the electromagnetic field is located and through which the product to be checked passes in a pass-through direction.

The positioning of the electromagnetic detector in various parts of a machine of the tobacco industry requires the presence of connecting cables between the detector and a machine control unit, which is configured to emit signals such that they create the electromagnetic field, to receive signals which indicate an electromagnetic field altered due to the product inspected, and to assess the quality characteristics of the product by analysing the altered electromagnetic field.

The electromagnetic detector comprises an emitting probe for creating the electromagnetic field and a receiving probe to receive the electromagnetic field altered by the presence of the product. The emitting probe and the receiving probe are positioned inside the electromagnetic detector and are connected to respective external emitting and receiving connectors by means of which the electromagnetic detector receives from the control unit the signals for emitting the electromagnetic field and transmits to the control unit the respective signals of the electromagnetic field altered by the presence of the product.

The emitting probe and the receiving probe have a straight shape and their positioning in the electromagnetic detector, together with the shape of the electromagnetic detector itself, determine a main direction of extension of the electromagnetic field and a concentration of the field in an inspection zone of the electromagnetic detector. The inspection zone is that in which an intensity value of the field is at its maximum and, therefore, in it there is a greater quantity of product to be inspected.

If the electromagnetic detector is a microwave resonator, the electromagnetic inspection field is an electric field and the direction of the electric field directly influences the result of the product inspection.

Document WO2016162292 shows various versions of a U-shaped microwave resonator which has a detecting channel in which the suction belt is enclosed by three sides. Inside the microwave resonator shown in WO2016162292 the emitting probe and the receiving probe are positioned parallel to each other and at the sides of the suction belt and the detecting channel, so that the main direction of extension of the electric field is positioned along the conveying path of the suction belt, that is to say, in the same pass-through direction as the tobacco to be inspected.

Indeed, it is advantageous, to improve detecting efficiency, that the electric field extends mainly along the detecting channel in the pass-through direction of the product to be inspected, since with this configuration of the electric field the detection of the density and/or humidity properties of the tobacco held by the suction belt is particularly effective.

In addition, the direction of the electric field in the pass-through direction is also particularly advantageous for inspection of a rod-shaped article, which has a main longitudinal axis of extension, since the electric field passes through the article longitudinally.

However, to obtain an electric field oriented in the pass-through direction in a U-shaped resonator, the emitting probe and the receiving probe must be positioned parallel to each other and at the sides of the detecting channel. Therefore, the emitting connector and the receiving connector of the resonator, to which the cables which carry the emission and reception signals to the control unit are connected, must be positioned at the sides of the detecting channel, in a wall of the resonator positioned upstream, or downstream, of the inspection zone.

The connecting cables and the external connectors therefore take up space both on an external side of the machine facing towards the operator, and on an internal side of it.

This requires special attention to be paid when positioning those connectors and connecting cables, at the moment of designing the machine zone in which the electromagnetic detector is located, above all if that machine zone must also accommodate many other mechanical or detection devices. Indeed, the presence of cables from both sides of the electromagnetic resonator increases the dimensions of the device and the difficulty placing it in several, particularly crowded machine zones.

EP3176567 discloses an arrangement for checking the quality of the cigarette head on cigarettes conveyed transversely along a conveying path. The arrangement comprises at least one microwave resonator, designed as a reflection resonator with an elongated resonator cavity, which is transversely connected to its longitudinal extent by a passage through which the conveying path runs, the reflection resonator having a microwave coupling and a reflection surface on opposite sides with respect to the passage. The microwaves are coupled into the microwave coupling via an antenna which is operated both as a coupling antenna and as a decoupling antenna.

EP 2572594 discloses a microwave resonator for measuring properties of a strand of material in the tobacco industry, with one hollow cylindrical interior which is penetrated by a strand of material and to which microwaves are fed. A coupling antenna isolated from the hollow cylinder by an insulating ring is used to couple the microwaves generated by a microwave generator, another antenna isolated from the hollow cylinder by another insulation ring is used to decouple the microwaves.

The Applicant also observed that, over time, instabilities may arise in the checks carried out by such electromagnetic detectors and that such instabilities are mainly due to the presence of extraneous bodies in those detectors which modify the electromagnetic field in an unpredictable way. A machine of the tobacco industry is, by definition, in many zones of it, an environment in which there may be unwanted fluid substances present such as any liquids, for example oily substances, or gases, such as conditioned air, which contain, for example, a percentage of humidity different to that of the tobacco and/or an environment in which there may be extraneous bodies present in suspension, such as grains of dust, fine dust, particles of tobacco or of other materials.

The grains of dust, or the particles of tobacco or of other unwanted material, may be deposited and build up in cracks or splits present in the detecting channel of a detector. Since it is not possible to establish beforehand the position or the moment of build-up of such extraneous bodies in the detecting channel, the detection of the characteristic properties of the product may be subject to unexpected interference, since the detection itself is unexpectedly distorted.

As a result, the electromagnetic detector could indicate a fault situation and the products checked by the detector could be considered defective since they have unacceptable quality characteristics, even if the products checked are in reality free of defects. In other words, it is not possible to know beforehand if a fault situation identified by the electromagnetic detector corresponds precisely to a real defect of the product checked or if the fault situation corresponds to interference due to the build-up of extraneous bodies in the detecting channel.

At present, in order to improve measurement, there are frequent manual cleaning procedures carried out by a machine operator, which involve cleaning the detecting channel with a predetermined frequency. However, this is not enough to guarantee the absence of interference in the measurement, since such manual cleaning might not completely remove all of the extraneous bodies from the machine zone in which the electromagnetic detector is present and, therefore, such extraneous bodies could be deposited in the detecting channel after the cleaning procedure. In this context, the technical purpose which forms the basis of this invention is to propose an electromagnetic detector which overcomes at least some of the above-mentioned disadvantages of the prior art.

In particular, this invention has for an aim to provide an electromagnetic detector having a detecting channel, in which a product is fed along a pass-through direction, which is capable of guaranteeing that the electromagnetic field extends in a main direction which coincides with the pass-through direction and which, at the same time, allows simplified wiring between the detector and an external control unit for it.

Another aim of this invention is to provide an electromagnetic detector which allows selection of the positioning of the emitting connector and of the receiving connector relative to the zone of the machine in which the detector is intended to be installed.

A further aim of this invention is to provide an electromagnetic detector which is simple and inexpensive to make.

In one version, it is the aim of this invention to provide an electromagnetic detector capable of guaranteeing a correct detection of properties of a product of the tobacco industry even in the presence of extraneous bodies in suspension.

Another aim of that version is to provide an electromagnetic detector capable of preventing the unwanted entry of extraneous bodies into the detector itself.

Another different aim of that version is to provide an electromagnetic detector capable of making any unwanted fluid substances and/or extraneous bodies present in the detector come out.

The technical purpose specified and the aims indicated are substantially achieved by different embodiments of the invention.

The aims are also achieved by further characteristics described below, including the technical characteristics set out in one or more of the appended claims.

Further characteristics and advantages of this invention will be more apparent from the approximate, non-limiting description of a preferred, non-limiting embodiment of an electromagnetic detector, as illustrated in the accompanying drawings in which:
Figure 1 is a perspective view of the electromagnetic resonator according to this invention which comprises a detecting channel and emitting connector and a receiving connector which are fixed to a base wall;
Figure 2 shows a different perspective view of the microwave resonator of Figure 1;
Figure 3 shows a view of the electromagnetic resonator of Figure 1 from the side of an emitting connector and of a receiving connector;
Figure 4 shows a front view of the electromagnetic resonator of Figure 1;
Figure 5 shows a view of the electromagnetic resonator of Figure 1 from the side opposite to that of the emitting connector and of the receiving connector;
Figure 6 shows a cross-section along a cross-section plane VI - VI of Figure 3 of the electromagnetic resonator of Figure 1 comprising an emitting shell, a receiving shell, a dielectric sheath interposed between the two shells, an emitting probe and a receiving probe;
Figure 7 shows a perspective view of the electromagnetic detector in cross-section of Figure 6, with some parts removed for clarity;
Figure 8 shows the cross-section view of Figure 6, with some parts removed for clarity, with a distribution of intensity of the electromagnetic field;
Figure 9 shows an exploded view of the electromagnetic detector of Figure 1;
Figure 10 shows a perspective view of a variant of the electromagnetic detector of Figure 1, with some parts removed for clarity, in which the electromagnetic detector comprises a cleaning circuit configured to deliver compressed air into the detecting channel;
Figure 11 shows a different perspective view of the electromagnetic resonator of Figure 10;
Figure 12 shows a view of the electromagnetic resonator of Figure 10 from the side of the emitting connector, of the receiving connector and of a compressed air feed connector;
Figure 13 shows a cross-section view along a cross-section plane XIII - XIII of Figure 12 of the electromagnetic resonator of Figure 10;
Figure 14 shows a cross-section view along the cross-section plane XIV - XIV of Figure 13 of the electromagnetic resonator of Figure 10.

Hereinafter the same elements will be referred to using the same numbers for the various figures.

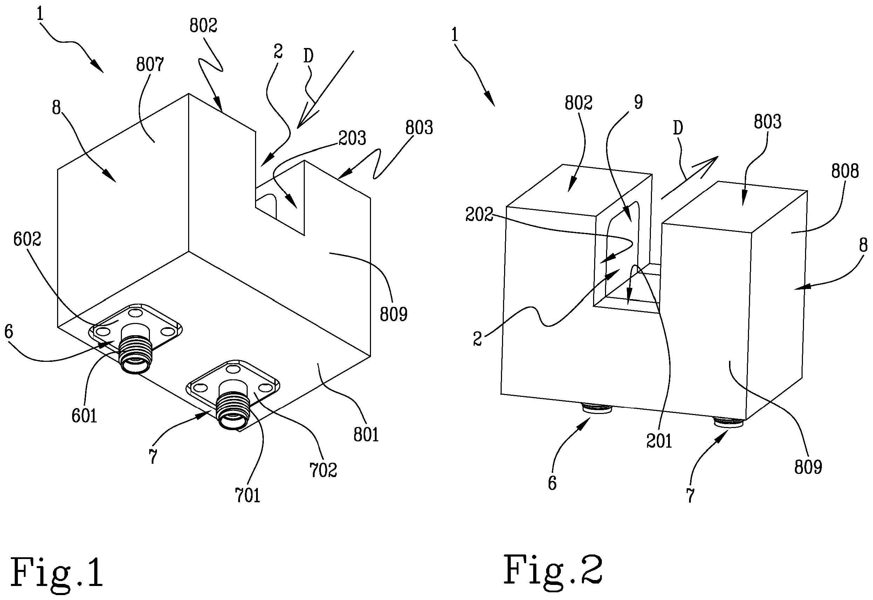

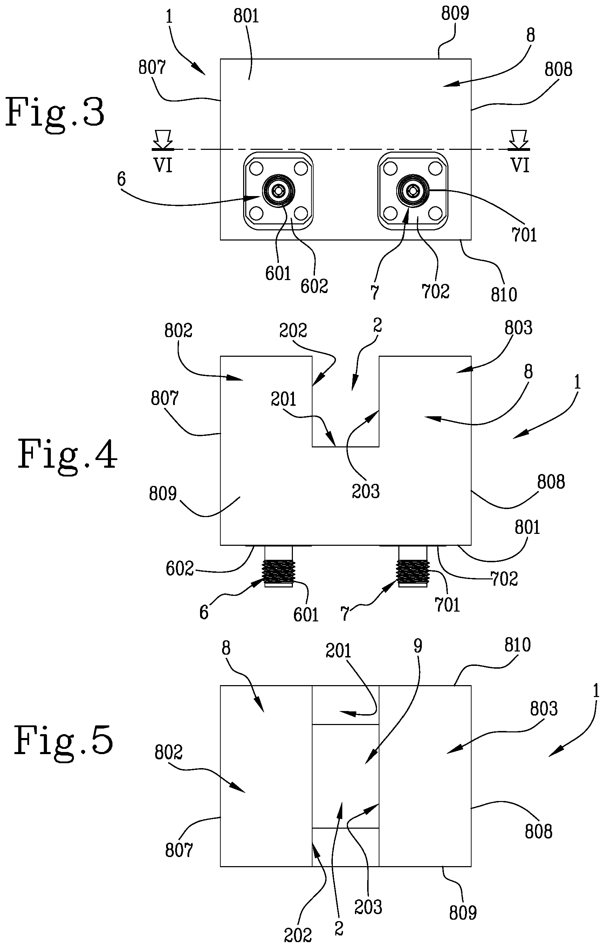

Figures 1 to 9 show an electromagnetic detector 1, hereinafter indicated more simply as a detector, for detecting one or more properties of a product (not illustrated) of the tobacco industry. The product may be a rod-shaped article, or a semi-finished product. What the term "product" means has been described in detail previously and for brevity will not be repeated now.

The properties of the rod-shaped articles which can be detected by the detector 1 may be, for example: weight, dimensions, materials, type of pieces included in the article, distribution of the tobacco, positioning of the pieces relative to the article, presence of capsules and establishment of parameters for identifying the integrity and the position of each capsule in the piece of article.

The properties of a semi-finished product which can be detected by the detector 1 may be, for example: weight or density of the semi-finished product, for example before it is wrapped with metallized paper (or paper containing metallic particles).

As has already been described, the electromagnetic detector 1 according to this invention may advantageously be used in various machines of the tobacco industry.

The resonator 1 comprises a detecting channel 2 which is open on three sides to allow the product to pass through the detector 1 along a pass-through direction D.

It should be noticed that the detecting channel 2 extends longitudinally and has a longitudinal axis of extension parallel to the pass-through direction D. In the preferred embodiment of the resonator 1, shown in Figures 1 to 14, the detector 1 has the shape of a U or a C and the detecting channel 2 has the shape of a parallelepiped with a rectangular cross-section, as described below.

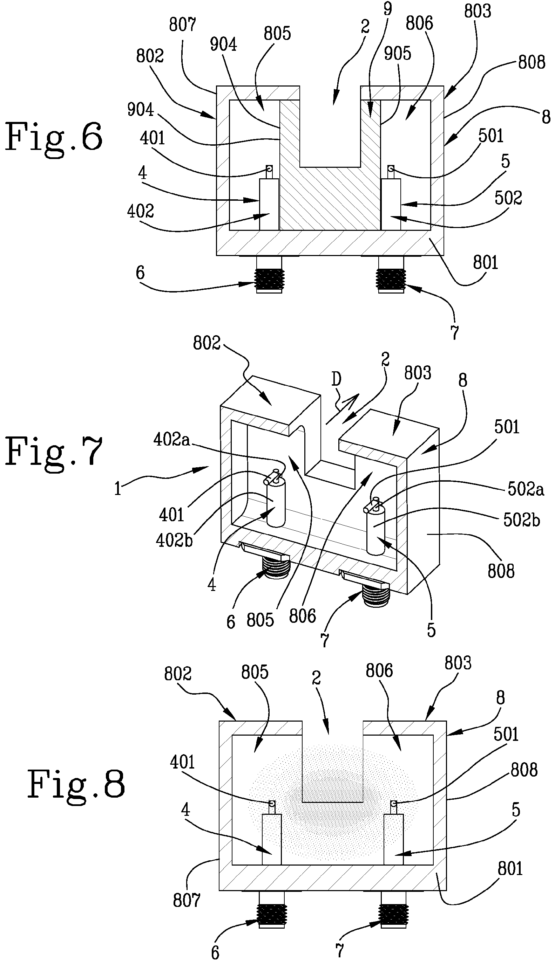

Located in the detecting channel 2 there is an electromagnetic field, hereinafter more simply referred to as the field, shown in Figure 8, which is oriented mainly in a detecting direction which corresponds to the pass-through direction D. It should be noticed that an intensity of the electromagnetic field is at its maximum near a central area of the detecting channel 2 in which the product to be inspected will pass.

The detector 1 comprises an emitting probe 4 for creating the field and a receiving probe 5 to receive a field altered by the presence of the product. The emitting probe 4 and the receiving probe 5 are positioned inside the detector 1.

As shown in Figure 6 to 8, the emitting probe 4 and the receiving probe 5 have an angled shape and comprise, respectively, a terminal emitting portion 401 and a terminal receiving portion 501 which are parallel to the direction of the detection field.

The term "angled shape" means that both the emitting probe 4 and the receiving probe 5 have an angle.

In other words, the emitting probe 4 has an angle and comprises a terminal emitting portion 401 parallel to the direction of the detection field; the receiving probe 5 has an angle and comprises a terminal receiving portion 501 parallel to the direction of the detection field.

The emitting probe 4 and the receiving probe 5 additionally comprise respectively an initial emitting portion 402 and an initial receiving portion 502. The initial emitting portion 402 forms an angle with the terminal emitting portion 401, the initial receiving portion 502 forms an angle with the terminal receiving portion 501 to connect the detector 1 towards the outside.

Thanks to the emitting probe 4 and the receiving probe 5 which have the respective terminal emitting portion 401 and the respective terminal receiving portion 501 parallel to the pass-through direction D, the electromagnetic field created in the detecting channel 2 is oriented in the same direction as the pass-through direction D.

However, since the emitting probe 4 and the receiving probe 5 are angled, that is to say, since both the emitting probe 4 and the receiving probe 5 have an angle, it is no longer necessary to position the emitting probe 4 and the receiving probe 5 parallel to the detecting channel 2.

In this way, a connection to an external control unit (not illustrated) is simplified. Indeed, based on the machine zone in which the detector 1 must be placed, the angling of the emitting probe 4 and of the transmitting probe 5 may be different, consequently facilitating the design of the detector 1.

It may be noticed that the terminal emitting portion 401 and the terminal receiving portion 501 are filiform-shaped and parallel to each other.

It should also be noticed that they have the same length.

The terminal emitting portion 401 and the terminal receiving portion 501 extend linearly.

Thanks to the fact that the terminal emitting portion 401 and the terminal receiving portion 501 are parallel to each other, great effectiveness is guaranteed in the creation of the field.

The detector 1 comprises un external emitting connector 6 and an external receiving connector 7 to connect the detector 1 respectively to an emitter (not illustrated) and to a receiver (not illustrated) of the control unit of an apparatus of a machine of the tobacco industry (not illustrated) in which the detector 1 is installable.

The initial emitting portion 402 and the initial receiving portion 502 connect, respectively, the terminal emitting portion 401 to the external emitting connector 6 and the terminal receiving portion 501 to the external receiving connector 7.

It should be noticed that each initial portion 402, 502, between the initial emitting portion 402 and the initial receiving portion 502, comprises a respective first stretch 402a, 502a, which is filiform-shaped and connected to the terminal portion 401, 501, and a respective second stretch 402b, 502b, also filiform-shaped, which is surrounded by insulating material and connected to the respective external connector 6, 7.

According to a version not illustrated, the initial portion 402, 502, is entirely filiform-shaped and the insulating material of the second stretch 402b, 502b is absent.

The initial emitting portion 402, angled relative to the terminal emitting portion 401 is straight and extends along a single axis of extension (not illustrated). Since the initial emitting portion 402 is not further angled, the external emitting connector 6 extends coaxially and aligned with the initial emitting portion 402. Between the initial emitting portion 402 and the terminal emitting portion 401 an angle is defined which determines the placing of the external emitting connector 6.

The same considerations apply for the initial receiving portion 502 and for the external receiving connector 7 which extends coaxially and aligned with the initial receiving portion 502.

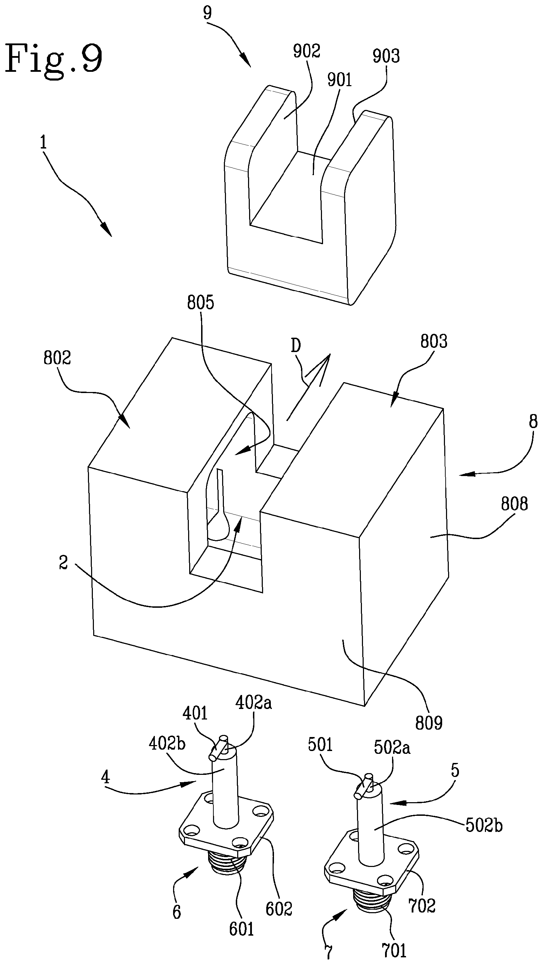

As illustrated at least in Figures 7 and 9, the initial emitting portion 402 and the initial receiving portion 502 are perpendicular to the terminal emitting portion 401 and to the terminal receiving portion 501, respectively, and, that is to say, an angle equal to 90° is defined between them.

Moreover, the initial emitting portion 402 and the initial receiving portion 502 are parallel to each other and lie in a single second plane, not illustrated, which is perpendicular to a first plane, not illustrated, which the terminal emitting portion 401 and the terminal receiving portion 502 lie in.

In other words, the emitting probe 4 and the receiving probe 5 are the same as each other and are placed in the resonator 1 parallel to each other, as shown in Figures 6 to 9. In this way, advantageously, the emitting connector 6 and the receiving connector 7 may be positioned side by side in the same wall of the resonator 1, greatly simplifying the connections necessary with the control unit and making the resonator itself as compact as possible, when installed in a machine.

The electromagnetic detector 1 comprises a body 8, which is hollow and is provided with a base wall 801, an emitting half-shell 802 and a receiving half-shell 803. The emitting half-shell 802 and the receiving half-shell 803 extend from the base wall 801.

In detail, the emitting half-shell 802 and the receiving half-shell 803 are parallel to each other.

It should be noticed that the emitting half-shell 802 and the receiving half-shell 803 may be made separately and then joined together to make the hollow body 8. Without restricting the scope of the invention, the hollow body 8 may also be made as a single body, as illustrated in the accompanying figures, and guarantee the same functions of the two half-shells 802, 803. The detecting channel 2 is positioned between the emitting half-shell 802 and the receiving half-shell 803.

The external emitting connector 6 and the external receiving connector 7 are fixed to the base wall 801.

In detail, the external emitting connector 6 and the external receiving connector 7 comprise respective connecting portions 601, 701 and respective fixing plates 602, 702 which are housed in respective compartments of the base wall 801. In this way, on the outside of the resonator 1 there is a reduction in the dimensions of the emitting connector 6 and of the receiving connector 7, leaving available only the connecting portions 601, 701.

According to one variant not illustrated, the emitting probe 4 and the receiving probe 5 are angled but between the terminal emitting portion 401 and the initial emitting portion 402 and between the terminal receiving portion 501 and the initial receiving portion 502 angles other than 90° are defined. The fact remains that the terminal emitting portion 401 and the terminal receiving portion 501 are parallel to each other and are parallel to the pass-through direction D.

For example, the emitting connector 6 and the receiving connector 7 may be fixed in the base wall 801 but the initial emitting portion 402 and the initial receiving portion 502 may be inclined both relative to the base wall 801 and relative to the terminal emitting portion 401 and to the terminal receiving portion 501.

The detector 1 additionally comprises a bottom wall 201, which delimits the bottom of the detecting channel 2 and connects the emitting half-shell 802 and the receiving half-shell 803 to each other. It should be noticed that, in the detector 1 described herein, the bottom wall 201 is flat, is parallel to the base wall 801 and is perpendicular to the emitting half-shell 802 and to the receiving half-shell 803. Alternatively, the bottom wall 201 could even be curved.

The detector 1 also comprises a dielectric sheath 9 housed in the body 8 and centrally interposed between the emitting half-shell 802 and the receiving half-shell 803, and which is surrounded by the emitting half-shell 802 and by the receiving half-shell 803. The dielectric sheath is made of polymeric material, for example HDPE high-density polyethylene, having characteristics such that it does not generate distortion and/or interference of the electromagnetic field in the detector 1.

The dielectric sheath 9 comprises a bottom zone 901 forming part of the bottom wall 201.

In addition, the dielectric sheath 9 comprises an emitting zone 902 and a receiving zone 903 which face each other to define, in between them, a detecting chamber forming part of the detecting channel 2 in which the field is located, as described in more detail below.

If the detector 1 is a microwave resonator, for example operating at a wavelength of between 10⁸ and 10¹² Hz to measure the density and/or the humidity of the product, the detecting chamber is a resonance chamber. Alternatively, the detector 1 may be a capacitive measuring device.

The dielectric sheath 9 internally delimits in the detector 1 an emitting cavity 805 in the emitting half-shell 802 and a receiving cavity 806 in the receiving half-shell 803.

As shown in Figures 6 and 9, the dielectric sheath 9 extends as far as the base wall 801 and makes contact with the base wall 801. Optionally, in a version not illustrated, the dielectric sheath 9 is fixed to the body 8 in zones unaffected by the electromagnetic field and is not in contact with the base wall 801.

Advantageously, the dielectric sheath 9 allows noticeable improvement of the efficiency and effectiveness of the detector 1, since it provides a protective barrier which prevents the access of unwanted external agents, for example dust, into the emitting cavity 805 and the receiving cavity 806, defines the detecting chamber and allows optimization of the measuring process by promoting concentration and homogenization of the radiation transmitted by the emitting probe 4 inside the detecting chamber, also optimizing its reception by the receiving probe 5.

The emitting probe 4 is positioned in the emitting cavity 805, the receiving probe 5 is positioned in the receiving cavity 806.

Indeed, the dielectric sheath 9 comprises an emitting panel 904 which at least partly delimits the emitting cavity 805, and a receiving panel 905 which at least partly delimits the receiving cavity 806.

It should be noticed that the dielectric sheath 9, as shown in Figure 9, has the shape of a U-shaped or C-shaped collar, and that the emitting panel 904 and the receiving panel 905 are opposite panels, parallel to each other, which are perpendicular to the bottom wall 201 and which externally delimit the dielectric sheath 9.

The initial emitting portion 402 is close to the emitting panel 904 and the initial receiving portion 502 is close to the receiving panel 905.

In detail, the second stretch 402b of the initial emitting portion 402 is in contact with the emitting panel 904. The second stretch 502b of the initial receiving portion 502 is in contact with the receiving panel 905.

It should be noticed that the body 8 additionally comprises an emitting side wall 807 and a receiving side wall 808 which face each other, extend from the base wall 801 and laterally delimit the emitting half-shell 802 and the receiving half-shell 803, respectively.

Moreover, the body 8 comprises a front wall 809 and a rear wall 810 which also face each other, extend from the base wall 801, have the shape of a U or a C and are positioned between the emitting side wall 807 and the receiving side wall 808 to frontally delimit the emitting half-shell 802 and the receiving half-shell 803.

The front wall 809 and the rear wall 810 therefore comprise a respective front opening and a respective rear opening which define the ends of the detecting channel 2.

The initial emitting portion 402 and the initial receiving portion 502 are close to the rear wall 810. However, there must not be any contact between each filiform-shaped first stretch 402a, 502a (or the entire initial emitting portion 402 and the entire initial receiving portion if they are entirely filiform-shaped) and the rear wall 810. Preferably, the distance between each filiform-shaped first stretch 402a, 502a and the rear wall 810 is equal to at least 0.5 mm. The terminal emitting portion 401 and the terminal receiving portion 501 are positioned to face towards the front wall 809.

As already indicated, the terminal emitting portion 401 and the terminal receiving portion 501 are linear. In detail, the terminal emitting portion 401 and the terminal receiving portion 501 have a length included in a range from 0.5 mm to a maximum length where each terminal portion 401, 501 extends until near the front wall 809 (without touching it).

As already indicated, the detector 1 may be installed in an apparatus forming part of a machine of the tobacco industry.

If the apparatus is an apparatus for conveying and inspecting a semi-finished product containing tobacco particles, the apparatus may comprise a belt conveyor (not illustrated) configured to hold and convey the semi-finished product along a conveying path which comprises a guide channel (not illustrated) delimited at the sides by two side walls and at the top by a belt, perforated or porous, preferably a suction belt (not illustrated).

The apparatus may also comprise the detector 1 according to this invention for detecting properties of the semi-finished product for the purposes of inspection of the self-same semi-finished product.

In this case, the detecting channel 2 is configured to slidably receive, in the pass-through direction D, at least one portion of the suction belt and at least one portion of the semi-finished product held on the belt.

The detecting channel 2 is also configured to receive guide elements (not illustrated) of the side walls of the conveyor, which delimit the suction belt in a localized way, that is to say, at the detecting channel 2.

The guide elements are made of a polymeric material, for example the same polymeric material as the dielectric sheath 9, such that they do not generate distortion and/or interference of the electromagnetic field in the resonator 1. Advantageously, the presence of the angled emitting probe 4 and receiving probe 5 allows the obtainment of a detector 1 in which the emitting connector 6 and the receiving connector 7 come out of the detector transversally relative to the belt.

If, preferably, the detector 1 is positioned below the belt, that is to say, the bottom wall 201 of the detecting channel 2 is under the belt, then the emitting connector 6 and the receiving connector 7 come out downward and are easily connectable to the control unit of the apparatus for conveying and inspecting.

In use, the terminal emitting portion 401 of the emitting probe and the respective terminal receiving portion 501 of the receiving probe 5, which are positioned parallel to the pass-through direction D, create and respectively receive a field in the detecting channel 2 oriented in the same direction as the pass-through direction D, which is in particular concentrated in the detecting chamber defined between the emitting zone 902 and the receiving zone 903 of the dielectric sheath 9.

Since the emitting probe 4 and the receiving probe 5 are shaped with at least one angle, between the terminal emitting portion 401, the terminal receiving portion 501 and respectively the initial emitting portion 402 and the initial receiving portion 502, connection of the detector 1 towards the outside is simplified.

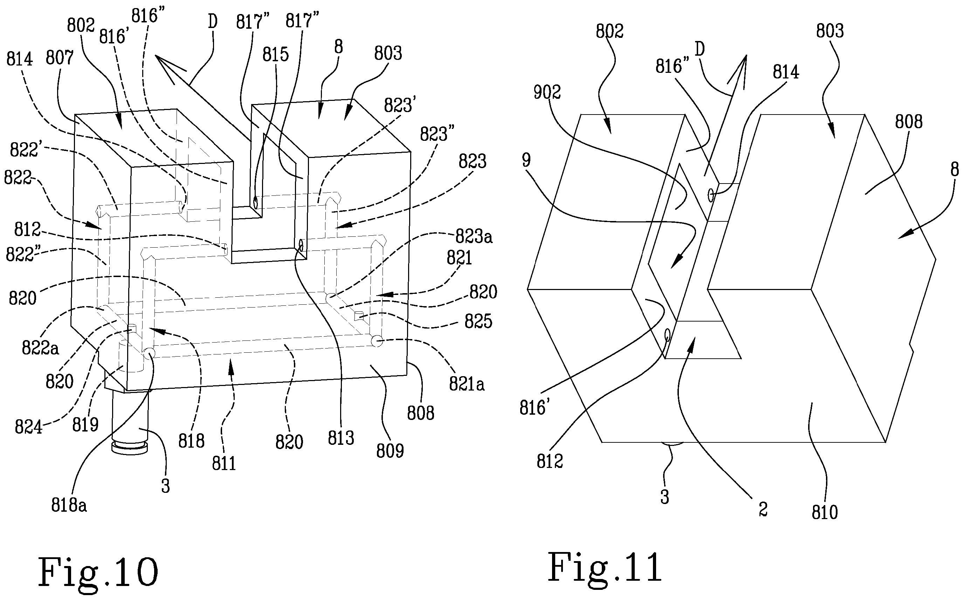

Figures 10 to 14 show a detector 1 according to an alternative version, which comprises a cleaning circuit 811 for removing any unwanted fluid substances and/or extraneous bodies from the detecting channel 2 which may also advantageously be used in the detector 1 of Figures 1 to 9. The parts of the electromagnetic detector 1 of Figures 10 to 14 common to the electromagnetic detector of Figures 1 to 9 will be labelled using the same reference numbers already used in those figures and will not be described again in detail.

With the terminology indicated, without restricting the scope of the invention, unwanted fluid substances herein also refer to any liquids or gases which contain, for example a percentage of humidity which could compromise the detection performed by the detector 1. Moreover, with the terminology indicated, without restricting the scope of the invention, extraneous bodies herein also refer to any dusty deposits of any kind, including residues of the semi-finished product or of other materials present in the environment, even such as tobacco particles released in an unwanted way by the belt, and even grains of dust, fine dust, other particles of tobacco or of other materials. The cleaning circuit 811, shown in Figure 10 and 11, is configured to deliver, that is to say, to blow, compressed air, preferably into the detecting channel 2.

Thanks to the delivery of compressed air into the detecting channel 2, the cleaning circuit 811 guarantees the removal of any unwanted fluid substances and/or unwanted extraneous bodies which may be present in it and also guarantees that any unwanted fluid substances and/or bodies in suspension in the machine zone in which the detector 1 is installed do not enter the detecting channel 2.

Consequently, thanks to the cleaning circuit 811 of the detector 1, there is guaranteed absence of extraneous bodies in the detecting channel 2 in which the field is located and, therefore, correct detection of the characteristics of the product is guaranteed, unaffected by the environment in which the detector is installed.

The compressed air delivered by the cleaning circuit 811 is, preferably, microfiltered and free of humidity.

As already indicated, the detector 1 comprises a body 8, which is hollow and comprises a base wall 801, an emitting half-shell 802 and a receiving half-shell 803, which extend from the base wall 801.

As already indicated, the emitting half-shell 802 and the receiving half-shell 803 are parallel to each other and the detector 1 comprises a dielectric sheath 9 housed in the body 8, the sheath being centrally interposed between the emitting half-shell 802 and the receiving half-shell 803 and surrounded by the emitting half-shell 802 and by the receiving half-shell 803, the dielectric sheath 9 delimiting in the resonator 1 the emitting cavity 805 in the emitting half-shell 802 and the receiving cavity 806 in the receiving half-shell 803.

Advantageously, the cleaning circuit 811 is entirely formed in the body 8 of the detector 1.

The cleaning circuit 811 comprises at least a first cleaning opening 812 in the emitting half-shell 802, or the receiving half-shell 803, to deliver compressed air from the emitting half-shell 802, or the receiving half-shell 803.

In other words, the first cleaning opening 812 may be in either the emitting half-shell 802 or the receiving half-shell 803.

The delivery of compressed air from the emitting half-shell 802, or the receiving half-shell 803, into the detecting channel 2 allows effective cleaning since a directional air jet is delivered towards the detecting channel 1 itself.

Preferably, the air jet emitted from the emitting half-shell 802, or the receiving half-shell 803, is directed along the longitudinal axis of extension of the detecting channel 2 so as to make the compressed air come out longitudinally and convey out of the detecting channel 2 any unwanted fluid substances or extraneous bodies present in it. In other words, the first cleaning opening 812 is positioned in the emitting half-shell 802, or in the receiving half-shell 803, in a way suitable for creating a longitudinal cleaning flow (not shown) in the detecting channel 2 directed towards the outside of the detecting channel 2.

In addition, the cleaning circuit comprises a second cleaning opening 813 in the receiving half-shell 803, or the emitting half-shell 802, to deliver compressed air from the receiving half-shell 803, or the emitting half-shell 802.

In other words, if the first cleaning opening 812 may be positioned in either the emitting shell 802 or the receiving shell 803, the second cleaning opening 813 is positioned in the other shell.

Advantageously, the second cleaning opening 813 delivers, preferably, an air jet directed towards the detecting channel 2 so that there is cleaning from both of the half-shells 802, 803 of the detecting channel 2.

Preferably, the air jet emitted from the receiving half-shell 803, or the emitting half-shell 802, is also directed along the longitudinal axis of extension of the detecting channel 2 so as to strengthen the longitudinal cleaning flow of the compressed air delivered from the emitting half-shell 802, or the receiving half-shell 803.

The first cleaning opening 812 and the second cleaning opening 813 are, therefore, both suitably positioned and operate in conjunction with each other to generate the cleaning flow.

According to a version shown in Figures 10 to 14, the first cleaning opening 812 and the second cleaning opening 813 lie in a first plane perpendicular to the pass-through direction D so that they face each other. For example, the first cleaning opening 812 and the second cleaning opening 813 are aligned, so as to obtain symmetrically emitted air jets in the detecting channel 2.

The cleaning circuit comprises a third cleaning opening 814 in the emitting half-shell 802, or the receiving half-shell 803, to deliver compressed air from the emitting half-shell 802, or the receiving half-shell 803, and a fourth cleaning opening 815 in the receiving half-shell 803, or the emitting half-shell 802, to deliver compressed air from the receiving half-shell 803, or the emitting half-shell 802. The third cleaning opening 814 and the fourth cleaning opening 815 lie in a second plane perpendicular to the pass-through direction D so that they face each other. For example, the third cleaning opening 814 and the fourth cleaning opening 815 are also aligned, so as to obtain symmetrically emitted air jets in the detecting channel 2. The first cleaning opening 812, the second cleaning opening 813, the third cleaning opening 814 and the fourth cleaning opening 815 all lie in the same plane parallel to the pass-through direction D and also parallel to the bottom wall 201 of the detecting channel.

Preferably, the first cleaning opening 812, the second cleaning opening 813, the third cleaning opening 814 and the fourth cleaning opening 815 are near to the bottom wall 201 of the detecting channel 2. Those openings 812, 813, 814, 815 are preferably circular but may also be shaped like a crack, or shaped differently, with regard to the cleaning flow to be obtained.

It should be noticed that the positioning of those cleaning openings 812, 813, 814 and 815 in the emitting half-shell 802 and/or in the receiving half-shell 803 may also be different to that shown in Figures 10 to 14, provided that a longitudinal cleaning flow is generated which is capable of conveying out of the detecting channel 2 any unwanted extraneous bodies and/or fluid substances present in it.

The detector 1 comprises an emitting wall 202 and a receiving wall 203 which face each other and laterally delimit the detecting channel 2. The emitting wall 202 and the receiving wall 203 extend from the bottom wall 201.

The emitting wall 202 comprises a pair of external emitting portions 816', 816" of the emitting half-shell 802. The receiving wall 203 comprises a pair of external receiving portions 817', 817" of the receiving half-shell 803.

In detail, the emitting zone 902 is located between the external emitting portions 816', 816", the receiving zone 903 is located between the external receiving portions 817', 817". In other words, the external emitting portions 816', 816" are located at the sides of the emitting zone 902, the external receiving portions 817', 817" are located at the sides of the receiving zone 903.

It should be noticed that the external emitting portions 816', 816" face the external receiving portions 817', 817" and define a first pair of facing external portions 816'; 817', and a second pair of facing external portions 816"; 817", respectively.

The first cleaning opening 812 is located in one of the external emitting portions 816', or 816"; or in one of the external receiving portions 817', 817". The first cleaning opening 812 and the second cleaning opening 813 are located in the first pair of external portions 816', 817'.

The third cleaning opening 814 and the fourth cleaning opening 815 are located in the second pair of external portions 816", 817".

The detector 1 additionally comprises a compressed air feed connector 3 which is fixed to the base wall 801.

The cleaning circuit 811 comprises a first distributing section 818, formed in the emitting half-shell 802, or the receiving half-shell 803, to feed compressed air to the first cleaning opening 812. Additionally, the cleaning circuit 811 comprises a connecting section 819 and an inlet section 820, which are formed in the base wall 801.

The connecting section 819 is connected to the feed connector 3 to receive compressed air and to feed compressed air to the inlet section 820. The inlet section 820 is connected to the connecting section 819 and is also connected to the first distributing section 818 at a first distribution point 818a. The inlet section 820 is configured to receive compressed air from the connecting section 819 and to feed compressed air to the distributing section 818.

Thanks to the fact that the first distributing section 818 for the compressed air is formed in the emitting half-shell 802, or the receiving half-shell 803, and that the inlet section 829 and the connecting section 819 are formed in the base wall 801, the cleaning circuit 811 is entirely formed in the body 8 of the detector 1 and it is therefore only necessary to feed compressed air to the feed connector 3, the cleaning circuit 811 consequently having reduced dimensions and overall space outside the detector 1.

Advantageously, the feed connector 3 is positioned alongside the emitting connector 6 and the receiving connector 7 in the base wall 801 and therefore the detector 1 has a single wall, the base wall 801, set up for external connections.

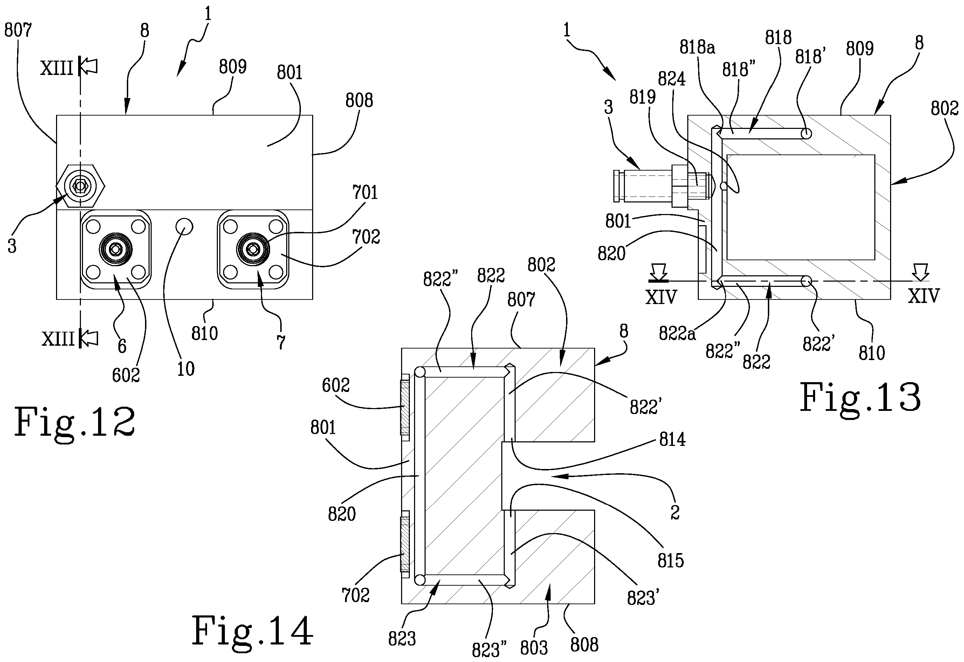

According to a version shown in Figure 12, the detector 1 comprises a temperature sensor 10 capable of detecting an internal temperature of the detector 1 for, if necessary, modifying the measurements carried out, if the electromagnetic field detected is affected by the internal temperature.

Advantageously, the detector 1 shown in Figures 1 to 9 may also comprise the temperature sensor 10.

The detector 1 comprises a second distributing section 821 to feed compressed air to the second cleaning opening 813, the second distributing section being formed in the receiving half-shell 803, or the emitting half-shell 802, and connected to the inlet section 820 at a second distribution point 821a. The first distribution point 818a and the second distribution point 821a are connected to each other by a first straight stretch of the inlet section 820.

The detector 1 comprises a third distributing section 822 to feed compressed air to the third cleaning opening 814 and a fourth distributing section 823 to feed compressed air to the fourth cleaning opening 815. The third distributing section 822 is formed in the emitting half-shell 802, or the receiving half-shell 803, the fourth distributing section 823 is formed in the receiving half-shell 803, or the emitting half-shell 802, and they are connected to the inlet section 820 at a respective third distribution point 822a and fourth distribution point 823a. The third distribution point 822a and the fourth distribution point 823a are connected to each other by a second straight stretch of the inlet section 820.

The inlet section 820 is in the form of a closed loop.

It should be noticed that the first distribution point 818a and the third distribution point 822a are connected to each other by a third straight stretch of the inlet section 820, the second distribution point 821a and the fourth distribution point 823a are connected to each other by a fourth straight stretch of the inlet section 820. In this way, the first straight stretch, the second straight stretch, the third straight stretch and the fourth straight stretch define the inlet section 820 in the form of a closed loop.

Each distributing section, between the first distributing section 818, the second distributing section 821, the third distributing section 822 and the fourth distributing section 823, comprises a first duct 818', 821', 822', 823' and a second duct 818", 821", 822", 823". The first duct 818', 821', 822', 823' leads into the respective cleaning opening 812, 813, 814, 815, whilst the second duct 818", 821", 822", 823" is connected to the inlet section 820. Preferably, the first duct 818', 821', 822', 823' is linear and is perpendicular to the respective emitting wall 202, or receiving wall 203 and the second duct 818", 821", 822", 823" is perpendicular to the first duct 818', 821', 822', 823'.

What was previously said about the fact that the entire cleaning circuit 811 is formed in the body 8 of the detector 1 still applies. That allows a compact detector to be obtained.

The cleaning circuit 811 is also configured to deliver compressed air internally, into the emitting cavity 805 of the emitting half-shell 802 and into the receiving cavity 806 of the receiving half-shell 803, in such a way as to maintain an overpressure in them.

Indeed, the cleaning circuit 811 comprises at least one internal emitting opening 824 located in the emitting half-shell 802, to deliver compressed air into the emitting cavity 805 and at least one internal receiving opening 825 located in the receiving half-shell 803, to deliver compressed air into the receiving cavity 806.

In this way, compressed air is delivered, and, that is to say, an overpressure is maintained in both the emitting cavity 805 and the receiving cavity 806 in order to prevent any unwanted fluid substances and/or extraneous bodies from entering the cavities 805, 806.

In detail, it should be noticed that the internal emitting opening 824 and the internal receiving opening 825 are connected, respectively, to the third straight stretch and to the fourth straight stretch of the inlet section 820 which are respectively positioned at the emitting half-shell 802 and the receiving half-shell 803.

If, as already indicated, the detector 1 is installed in the apparatus for conveying and inspecting the semi-finished product containing tobacco particles, and the detecting channel is configured to slidably receive, in the pass-through direction, at least one portion of the suction belt, at least one portion of the tobacco held on the suction belt and the guide elements which delimit the suction belt, the cleaning circuit 811 is configured to clean from the detecting channel 2 any extraneous bodies such as tobacco particles released by the suction belt. In detail, the cleaning circuit is configured to clean two portions of the detecting channel 2, each portion being defined between a guide element and the corresponding emitting wall 202, or receiving wall 203.

In use, the cleaning circuit 811 of the detector 1 receives compressed air from the feed connector 3 and delivers compressed air into the detecting channel 2 to clean from the detecting channel 2 any bodies in suspension which may be present.

The cleaning circuit 811 delivers into the detecting channel 2 cleaning air jets capable of creating a longitudinal cleaning flow directed towards the outside of the detecting channel 2, capable of conveying out of the detecting channel 2 any extraneous bodies present in it and capable of preventing any further extraneous bodies in suspension from accessing the detecting channel 2.

If the detector 1 is integrated in a conveying and inspecting apparatus, in which the detecting channel 2 receives the suction belt laterally delimited by guide elements, the cleaning flow acts between the emitting wall 202 and one guide element and between the receiving wall 203 and the other guide element. In addition, the cleaning circuit 811 creates an overpressure in the emitting cavity 805 and in the receiving cavity 806 to prevent extraneous bodies from being able to enter and remain trapped in internal parts of the detector 1.

The compressed air is delivered at regular intervals, which may change over time in terms of delivery duration and delivery pressure, or the compressed air may be delivered continuously.

It should be noticed that what was previously said with reference to the detector 1 comprising the angled emitting probe 4 and receiving probe 5 may also advantageously be applied to the detector 1 of Figures 10 to 14 comprising the cleaning circuit 801.

Indeed, both of the variants of the detector 1 are advantageously and simultaneously applicable, if necessary, to obtain a compact detector 1, which is easy to make and can guarantee effective detection of quality characteristics of a product made to pass through the detecting channel 2 of the detector 1.

## Claims

1. An electromagnetic detector (1) for detecting one or more properties of a product, for example a rod-shaped article, or a semi-finished product of the tobacco industry, comprising a detecting channel (2) which is open on three sides to allow the product to pass through the electromagnetic detector (1) along a pass-through direction (D), wherein in the detecting channel (2) is located an electromagnetic field oriented in a detecting direction parallel to the pass-through direction (D); wherein the electromagnetic detector (1) comprises an emitting probe (4) for creating the electromagnetic field and a receiving probe (5) to receive an electromagnetic field altered by the presence of the product, the probes (4; 5) being positioned inside the electromagnetic detector (1), **characterized in that** the emitting probe (4) and the receiving probe (5) comprise, respectively, a terminal emitting portion (401) and a terminal receiving portion (501) which are parallel to the direction of the detection field, and an initial emitting portion (402) and an initial receiving portion (502) connecting the detector (1) to the outside; and wherein the initial emitting portion (402) forms an angle with the terminal emitting portion (401), the initial receiving portion (502) forms an angle with the terminal receiving portion (501), wherein the initial emitting portion (402) and the initial receiving portion (502) are straight, and each extends along a respective single axis of extension.

2. The detector according to claim 1, wherein the terminal emitting portion (401) and the terminal receiving portion (501) are filiform-shaped and parallel to each other.

3. The detector according to claim 1, or 2, wherein the terminal emitting portion (401) and the terminal receiving portion (501) are the same length.

4. The detector according to one or more of the preceding claims , and comprising an external emitting connector (6) and an external receiving connector (7) to connect the electromagnetic detector (1) to an emitter and a receiver of a control unit, respectively, and wherein the initial emitting portion (402) and the initial receiving portion (502) connect, respectively, the terminal emitting portion (401) to the external emitting connector (6) and the terminal receiving portion (501) to the external receiving connector (7).

5. The detector according to one or more of the preceding claims, wherein each initial portion (402; 502) between the initial emitting portion (401) and the initial receiving portion (501) comprises a respective first stretch (402a; 502a), which is filiform-shaped and connected to the respective terminal portion (401; 501), and a respective second stretch (402b, 502b), which is surrounded by insulating material and connected to the respective external connector (6; 7).

6. The detector according to one or more of the preceding claims, wherein the initial emitting portion (402) and the initial receiving portion (502) are perpendicular to the terminal emitting portion (401) and to the terminal receiving portion (501), respectively.

7. The detector according to one or more of the preceding claims, wherein the initial emitting portion (402) and the initial receiving portion (502) are parallel to each other and lie in a single second plane which is perpendicular to a first plane which the terminal emitting portion (401) and the terminal receiving portion (501) lie in.

8. The detector according to one or more of the preceding claims, wherein the electromagnetic detector (1) comprises a body (8) which is hollow and comprises a base wall (801), an emitting half-shell (802) and a receiving half-shell (803) which extend from the base wall (801); a dielectric sheath (9) housed in the body (8) and centrally interposed between the emitting half-shell (802) and the receiving half-shell (803) and which is surrounded by the emitting half-shell (802) and by the receiving half-shell (803); wherein the dielectric sheath (9) internally delimits an emitting cavity (805) in the emitting half-shell (802) and a receiving cavity (806) in the receiving half-shell (803), the emitting probe (4) being positioned in the emitting cavity (805) and the receiving probe (5) being positioned in the receiving cavity (806).

9. The detector according to claim 8, when dependent on any one of claims 4 to 7, wherein the external emitting connector (6) and the external receiving connector (7) are fixed to the base wall (801).

10. The detector according to claim 8, or 9, wherein the dielectric sheath (9) comprises an emitting panel (902) which at least partly delimits the emitting cavity (805) and a receiving panel (903) which at least partly delimits the receiving cavity (806) and wherein the initial emitting portion (402) is close to the emitting panel (902) and the initial receiving portion (502) is close to the receiving panel (903).

11. The detector according to claim 10, as appended to any one of claims 5 to 7, wherein the second stretch (402b) of the initial emitting portion (402) is in contact with the emitting panel (902) and the second stretch (502b) of the initial receiving portion (502) is in contact with the receiving panel (903).

12. The detector according to one or more of claims 8 to 11, wherein the electromagnetic detector (1) comprises an emitting side wall (807) and a receiving side wall (808), which face each other, extend from the base wall (801) and laterally delimit the emitting half-shell (802) and the receiving half-shell (803), respectively, a front wall (809) and a rear wall (810), which also face each other, extend from the base wall (801), have the shape of a U or a C and are positioned between the emitting side wall (807) and the receiving side wall (808) to frontally delimit the emitting half-shell (802) and the receiving half-shell (803); the initial emitting portion (402) and the initial receiving portion (502) being positioned close to the rear wall (810), the terminal emitting portion (401) and the terminal receiving portion (501) being positioned to face towards the front wall (809).

13. The detector according to claim 12, wherein the terminal emitting portion (401) and the terminal receiving portion (501) are linear and have a length included in a range from 0.5 mm to a maximum length where each terminal portion (401; 501) extends until reaching the proximity of the front wall (809).

14. The detector according to one or more of claims 8 to 13, wherein the dielectric sheath (9) comprises an emitting zone (902) and a receiving zone (903) which face each other to define, in between them, a detecting chamber forming part of the detecting channel (2) and containing the electromagnetic field.

15. The detector according to any one of the preceding claims, wherein the electromagnetic detector (1) is a microwave detector and operates, for example, at a wavelength of between 10⁸ and 10¹² Hz to measure the density and/or the humidity of the product.

16. An apparatus for conveying and inspecting a product of the tobacco industry, where the product is a semi-finished product containing tobacco particles and comprises:
- a belt conveyor configured to hold and convey the semi-finished product along a conveying path which comprises a guide channel delimited at the sides by two side walls and at the top by a belt, preferably a suction belt;
- an electromagnetic detector (1) according to any one of claims 1 to 15 wherein the detecting channel (2) is configured to slidably receive, in the pass-through direction (D), at least one portion of the belt and at least one portion of the semi-finished product held on the belt.

## Patentansprüche

1. Elektromagnetischer Detektor (1) zur Erfassung einer oder mehrerer Eigenschaften eines Produkts, beispielsweise eines stabförmigen Artikels oder eines Halbzeugs der tabakverarbeitenden Industrie, umfassend einen Erfassungskanal (2), der an drei Seiten offen ist, um dem Produkt zu erlauben, durch den elektromagnetischen Detektor (1) entlang einer Durchführungsrichtung (D) geführt zu werden, wobei im Erfassungskanal (2) ein elektromagnetisches Feld befindlich ist, das in einer Erfassungsrichtung parallel zur Durchgangsrichtung (D) ausgerichtet ist; wobei der elektromagnetische Detektor (1) eine Abgabesonde (4) umfasst, um das elektromagnetische Feld zu erzeugen, und eine Aufnahmesonde (5), um ein durch das Produkt verändertes elektromagnetisches Feld aufzunehmen, wobei die Sonden (4, 5) im elektromagnetischen Detektor (1) angeordnet sind, **dadurch gekennzeichnet, dass** die Abgabesonde (4) und die Aufnahmesonde (5) jeweils einen Endabgabeabschnitt (401) und einen Endaufnahmeabschnitt (501), die parallel zur Richtung des Erfassungsfeldes sind, und einen Anfangsabgabeabschnitt (402) und einen Anfangsaufnahmeabschnitt (502) umfassen, die den Detektor (1) mit der Außenseite verbinden; und wobei der Anfangsabgabeabschnitt (402) mit dem Endabgabeabschnitt (401) einen Winkel bildet, der Anfangsaufnahmeabschnitt (502) mit dem Endaufnahmeabschnitt (501) einen Winkel bildet, wobei der Anfangsabgabeabschnitt (402) und der Anfangsaufnahmeabschnitt (502) gerade sind und sich ein jeder entlang einer jeweiligen einzelnen Erstreckungsachse erstreckt.

2. Detektor nach Anspruch 1, wobei der Endabgabeabschnitt (401) und der Endaufnahmeabschnitt (501) fadenförmig und parallel zueinander sind.

3. Detektor nach Anspruch 1 oder 2, wobei der Endabgabeabschnitt (401) und der Endaufnahmeabschnitt (501) dieselbe Länge aufweisen.

4. Detektor nach einem oder mehreren der vorhergehenden Ansprüche und umfassend einen externen Abgabeverbinder (6) und einen externen Aufnahmeverbinder (7), um den elektromagnetischen Detektor (1) jeweils mit einem Sender und einem Empfänger der Steuereinheit zu verbinden, und wobei der Anfangsabgabeabschnitt (402) und der Anfangsaufnahmeabschnitt (502) jeweils den Endabgabeabschnitt (401) mit dem externen Abgabeverbinder (6) und den Endaufnahmeabschnitt (501) mit dem externen Aufnahmeverbinder (7) verbinden.

5. Detektor nach einem oder mehreren der vorhergehenden Ansprüche, wobei ein jeder Anfangsabschnitt (402; 502) zwischen dem Anfangsabgabeabschnitt (401) und dem Anfangsaufnahmeabschnitt (501) ein jeweiliges erstes Teilstück (402a; 502a), das fadenförmig ist und mit dem jeweiligen Endabschnitt (401; 501) verbunden ist, und ein jeweiliges zweites Teilstück (402b, 502b) umfasst, das von einem Isoliermaterial umgeben ist und mit dem jeweiligen externen Verbinder (6; 7) verbunden ist.

6. Detektor nach einem oder mehreren der vorhergehenden Ansprüche, wobei der Anfangsabgabeabschnitt (402) und der Anfangsaufnahmeabschnitt (502) jeweils senkrecht zu dem Endabgabeabschnitt (401) und dem Endaufnahmeabschnitt (501) sind.

7. Detektor nach einem oder mehreren der vorhergehenden Ansprüche, wobei der Anfangsabgabeabschnitt (402) und der Anfangsaufnahmeabschnitt (502) parallel zueinander sind und in einer einzelnen zweiten Ebene liegen, die senkrecht zu einer ersten Ebene ist, in der der Endabgabeabschnitt (401) und der Endaufnahmeabschnitt (501) liegen.

8. Detektor nach einem oder mehreren der vorhergehenden Ansprüche, wobei der elektromagnetische Detektor (1) einen Körper (8) umfasst, der hohl ist und eine Basiswand (801), eine Abgabehalbschale (802) und eine Aufnahmehalbschale (803) umfasst, die sich von der Basiswand (801) erstrecken; einen dielektrischen Mantel (9), der in dem Körper (8) untergebracht und mittig zwischen der Abgabehalbschale (802) und der Aufnahmehalbschale (803) eingesetzt und von der Abgabehalbschale (802) und von der Aufnahmehalbschale (803) umgeben ist; wobei der dielektrische Mantel (9) einen Abgabehohlraum (805) in der Abgabehalbschale (802) und einen Aufnahmehohlraum (806) in der Aufnahmehalbschale (803) innen begrenzt, wobei die Abgabesonde (4) in dem Abgabehohlraum (805) positioniert ist und die Aufnahmesonde (5) in dem Aufnahmehohlraum (806) positioniert ist.

9. Detektor nach Anspruch 8, wenn abhängig von einem der Ansprüche 4 bis 7, wobei der externe Abgabeverbinder (6) und der externe Aufnahmeverbinder (7) an der Basiswand (801) befestigt sind.

10. Detektor nach Anspruch 8 oder 9, wobei der dielektrische Mantel (9) eine Abgabeplatte (902), die mindestens teilweise den Abgabehohlraum (805) begrenzt, und eine Aufnahmeplatte (903) umfasst, die mindestens teilweise den Aufnahmehohlraum (806) begrenzt, und wobei sich der Anfangsabgabeabschnitt (402) in der Nähe der Abgabeplatte (902) befindet und sich der Anfangsaufnahmeabschnitt (502) in der Nähe der Aufnahmeplatte (903) befindet.

11. Detektor nach Anspruch 10, wenn dieser von einem der Ansprüche 5 bis 7 abhängt, wobei das zweite Teilstück (402b) des Anfangsabgabeabschnitts (402) in Kontakt mit der Abgabeplatte (902) ist und das zweite Teilstück (502b) des Anfangsaufnahmeabschnitts (502) in Kontakt mit der Aufnahmeplatte (903) ist.

12. Detektor nach einem oder mehreren der Ansprüche 8 bis 11, wobei der elektromagnetische Detektor (1) eine Abgabeseitenwand (807) und eine Aufnahmeseitenwand (808), die einander zugewandt sind, sich von der Basiswand (801) erstrecken und seitlich die Abgabehalbschale (802) und die Aufnahmehalbschale (803) begrenzen, jeweils eine Vorderwand (809) und eine Rückwand (810) umfasst, die auch einander zugewandt sind, sich von der Basiswand (801) erstrecken, die Form eines U oder eines C aufweisen und zwischen der Abgabeseitenwand (807) und der Aufnahmeseitenwand (808) positioniert sind, um vorderseitig die Abgabehalbschale (802) und die Aufnahmehalbschale (803) zu begrenzen; wobei der Anfangsabgabeabschnitt (402) und der Anfangsaufnahmeabschnitt (502) in der Nähe der Rückwand (810) positioniert sind, wobei der Endabgabeabschnitt (401) und der Endaufnahmeabschnitt (501) positioniert sind, um der Vorderwand (809) zugewandt zu sein.

13. Detektor nach Anspruch 12, wobei der Endabgabeabschnitt (401) und der Endaufnahmeabschnitt (501) linear sind und eine Länge im Bereich von 0,5 mm bis zu einer maximalen Länge aufweisen, bei der sich ein jeder Endabschnitt (401; 501) erstreckt, bis er die Nähe der Vorderwand (809) erreicht.

14. Detektor nach einem oder mehreren der Ansprüche 8 bis 13, wobei der dielektrische Mantel (9) eine Abgabezone (902) und eine Aufnahmezone (903) umfasst, die einander zugewandt sind, um zwischen ihnen eine Erfassungskammer zu definieren, die einen Teil des Erfassungskanals (2) formt und das elektromagnetische Feld enthält.

15. Detektor nach einem der vorhergehenden Ansprüche, wobei der elektromagnetische Detektor (1) ein Mikrowellendetektor ist und beispielsweise bei einer Wellenlänge von 10⁸ bis 10¹² Hz arbeitet, um die Dichte und/oder Feuchtigkeit des Produkts zu messen.

16. Gerät zur Förderung und Prüfung eines Produkts der tabakverarbeitenden Industrie, wobei es sich beim Produkt um ein Tabakteilchen enthaltendes Halbzeug handelt, wobei das Gerät Folgendes umfasst:
- einen Bandförderer, der ausgelegt ist, um das Halbzeug entlang eines Förderwegs, der einen Führungskanal umfasst, der an den Seiten durch zwei Seitenwände und an der Oberseite durch ein Band, vorzugsweise ein Saugband, begrenzt ist, zu halten und zu fördern;
- einen elektromagnetischen Detektor (1) nach einem der Ansprüche 1 bis 15, wobei der Erfassungskanal (2) ausgelegt ist, um in der Durchführungsrichtung (D) verschiebbar mindestens einen Abschnitt des Bands und mindestens einen Abschnitt des auf dem Band gehaltenen Halbzeugs aufzunehmen.

## Revendications

1. Détecteur électromagnétique (1) permettant la détection d'une ou plusieurs propriétés d'un produit, par exemple un article en forme de tige, ou d'un produit semi-fini de l'industrie du tabac, comprenant un canal de détection (2) qui est ouvert sur trois côtés pour permettre au produit de passer à travers le détecteur électromagnétique (1) le long d'une direction de passage (D), dans lequel dans le canal de détection (2) est situé un champ électromagnétique orienté dans une direction de détection parallèle à la direction de passage (D) ; dans lequel le détecteur électromagnétique (1) comprend une sonde émettrice (4) pour créer le champ électromagnétique et une sonde réceptrice (5) pour recevoir un champ électromagnétique modifié par la présence du produit, les sondes (4 ; 5) étant positionnées à l'intérieur du détecteur électromagnétique (1), **caractérisé en ce que** la sonde émettrice (4) et la sonde réceptrice (5) comprennent, respectivement, une portion émettrice terminale (401) et une portion réceptrice terminale (501) qui sont parallèles à la direction du champ de détection, et une portion émettrice initiale (402) et une portion réceptrice initiale (502) connectant le détecteur (1) à l'extérieur ; et dans lequel la portion émettrice initiale (402) forme un angle avec la portion émettrice terminale (401), la portion réceptrice initiale (502) forme un angle avec la portion réceptrice terminale (501), dans lequel la portion émettrice initiale (402) et la portion réceptrice initiale (502) sont droites, et chacune s'étend le long d'un axe d'extension unique respectif.

2. Détecteur selon la revendication 1, dans lequel la portion émettrice terminale (401) et la portion réceptrice terminale (501) sont de forme filiforme et parallèles l'une à l'autre.

3. Détecteur selon la revendication 1 ou 2, dans lequel la portion émettrice terminale (401) et la portion réceptrice terminale (501) ont la même longueur.

4. Détecteur selon une ou plusieurs des revendications précédentes, et comprenant un connecteur d'émission externe (6) et un connecteur de réception externe (7) pour connecter le détecteur électromagnétique (1) à un émetteur et à un récepteur d'une unité de commande, respectivement, et dans lequel la portion émettrice initiale (402) et la portion réceptrice initiale (502) connectent, respectivement, la portion émettrice terminale (401) au connecteur émetteur externe (6) et la portion réceptrice terminale (501) au connecteur récepteur externe (7).

5. Détecteur selon une ou plusieurs des revendications précédentes, dans lequel chaque portion initiale (402 ; 502) entre la portion émettrice initiale (401) et la portion réceptrice initiale (501) comprend un premier tronçon respectif (402a ; 502a), qui est de forme filiforme et connecté à la portion terminale respective (401 ; 501), et un second tronçon respectif (402b, 502b), qui est entouré par un matériau isolant et connecté au connecteur externe respectif (6 ; 7).

6. Détecteur selon une ou plusieurs des revendications précédentes, dans lequel la portion émettrice initiale (402) et la portion réceptrice initiale (502) sont perpendiculaires à la portion émettrice terminale (401) et à la portion réceptrice terminale (501), respectivement.

7. Détecteur selon une ou plusieurs des revendications précédentes, dans lequel la portion émettrice initiale (402) et la portion réceptrice initiale (502) sont parallèles l'une à l'autre et se trouvent dans un seul second plan qui est perpendiculaire à un premier plan dans lequel se trouvent la portion émettrice terminale (401) et la portion réceptrice terminale (501).

8. Détecteur selon une ou plusieurs des revendications précédentes, dans lequel le détecteur électromagnétique (1) comprend un corps (8) qui est creux et comprend une paroi de base (801), une demi-coquille émettrice (802) et une demi-coquille réceptrice (803) qui s'étendent à partir de la paroi de base (801) ; une gaine diélectrique (9) logée dans le corps (8) et interposée au centre entre la demi-coquille émettrice (802) et la demi-coquille réceptrice (803) et qui est entourée par la demi-coquille émettrice (802) et par la demi-coquille réceptrice (803) ; dans lequel la gaine diélectrique (9) délimite intérieurement une cavité émettrice (805) dans la demi-coquille émettrice (802) et une cavité réceptrice (806) dans la demi-coquille réceptrice (803), la sonde émettrice (4) étant positionnée dans la cavité émettrice (805) et la sonde réceptrice (5) étant positionnée dans la cavité réceptrice (806).

9. Détecteur selon la revendication 8, lorsqu'elle dépend de l'une quelconque des revendications 4 à 7, dans lequel le connecteur émetteur externe (6) et le connecteur récepteur externe (7) sont fixés à la paroi de base (801).

10. Détecteur selon la revendication 8 ou 9, dans lequel la gaine diélectrique (9) comprend un panneau émetteur (902) qui délimite au moins partiellement la cavité émettrice (805) et un panneau récepteur (903) qui délimite au moins partiellement la cavité réceptrice (806) et dans lequel la portion émettrice initiale (402) est proche du panneau émetteur (902) et la portion réceptrice initiale (502) est proche du panneau récepteur (903).

11. Détecteur selon la revendication 10, lorsque celle-ci est rattachée à l'une quelconque des revendications 5 à 7, dans lequel le second tronçon (402b) de la portion émettrice initiale (402) est en contact avec le panneau émetteur (902) et le second tronçon (502b) de la portion réceptrice initiale (502) est en contact avec le panneau récepteur (903).

12. Détecteur selon une ou plusieurs des revendications 8 à 11, dans lequel le détecteur électromagnétique (1) comprend une paroi latérale émettrice (807) et une paroi latérale réceptrice (808), qui se font face, s'étendent depuis la paroi de base (801) et délimitent latéralement la demi-coquille émettrice (802) et la demi-coquille réceptrice (803), respectivement, une paroi avant (809) et une paroi arrière (810), qui se font également face, s'étendent depuis la paroi de base (801), ont la forme d'un U ou d'un C et sont positionnées entre la paroi latérale émettrice (807) et la paroi latérale réceptrice (808) pour délimiter frontalement la demi-coquille émettrice (802) et la demi-coquille réceptrice (803) ; la portion émettrice initiale (402) et la portion réceptrice initiale (502) étant positionnées à proximité de la paroi arrière (810), la portion émettrice terminale (401) et la portion réceptrice terminale (501) étant positionnées pour faire face vers la paroi avant (809).

13. Détecteur selon la revendication 12, dans lequel la portion émettrice terminale (401) et la portion réceptrice terminale (501) sont linéaires et ont une longueur comprise dans une plage de 0,5 mm à une longueur maximale où chaque portion terminale (401 ; 501) s'étend jusqu'à atteindre la proximité de la paroi avant (809).

14. Détecteur selon une ou plusieurs des revendications 8 à 13, dans lequel la gaine diélectrique (9) comprend une zone émettrice (902) et une zone réceptrice (903) qui se font face pour définir, entre elles, une chambre de détection faisant partie du canal de détection (2) et contenant le champ électromagnétique.

15. Détecteur selon l'une quelconque des revendications précédentes, dans lequel le détecteur électromagnétique (1) est un détecteur à micro-ondes et fonctionne, par exemple, à une longueur d'onde comprise entre 10⁸ et 10¹² Hz pour mesurer la densité et/ou l'humidité du produit.

16. Appareil pour transporter et inspecter un produit de l'industrie du tabac, où le produit est un produit semi-fini contenant des particules de tabac, et qui comprend :
- un transporteur à bande configuré pour maintenir et transporter le produit semi-fini le long d'un parcours de transport qui comprend un canal de guidage délimité sur les côtés par deux parois latérales et sur le dessus par une bande, de préférence une bande aspirante ;
- un détecteur électromagnétique (1) selon l'une quelconque des revendications 1 à 15, dans lequel le canal de détection (2) est configuré pour recevoir de manière coulissante, dans la direction de passage (D), au moins une portion de la bande et au moins une portion du produit semi-fini maintenu sur la bande.
